# EUROPÄISCHE PATENTSCHRIFT

(11) **EP 1 275 888 B1**
(45) Veröffentlichungstag und Bekanntmachung des Hinweises auf die Patenterteilung: **01.12.2004**
(21) Anmeldenummer: 01810674.0
(22) Anmeldetag: 09.07.2001
(51) Int. Cl.: F16J 9/02, F16J 9/28

(54) **Kolbenring**
Piston ring
Segment de piston

(43) Veröffentlichungstag der Anmeldung: 15.01.2003
(73) Patentinhaber: Burckhardt Compression AG, 8404 Winterthur (CH)
(72) Erfinder: Feistel, Norbert Georg, 8548 Ellikon a.d. Thur (CH)
(74) Vertreter: Dr. Graf & Partner

(56) Entgegenhaltungen:
- WO-A-97/19280
- DE-A- 4 209 550

## Beschreibung

Die Erfindung betrifft einen Kolbenring gemäss dem Oberbegriff von Anspruch 1.

Die Druckschrift WO 97/19280 offenbart einen Kolbenring für einen trockenlaufenden Kolbenkompressor, wobei der Kolbenring aus zwei Teilringen besteht, welche aus einem Kunststoff wie zum Beispiel PTFE gefertigt sind. Dieser Kolbenring weist den Nachteil auf, dass bei Druckschwankungen, und insbesondere bei einer im Bereich des Kolbenrings auftretenden Strömungsumkehr, der Kolbenring eine Bewegung in radialer Richtung, auch als Flatterbewegung bezeichnet, ausführt. Dies kann einen erhöhten Verschleiss des Kolbenrings bewirken, was eine ungenügende Standzeit des Kolbenkompressors zur Folge hat. Insbesondere beim Komprimieren sehr leichter Gase wie Wasserstoff ist ein Kolbenring mit einer guten und über einen langen Zeitraum konstanten Dichtwirkung erforderlich.

Es ist Aufgabe der vorliegenden Erfindung für einen trockenlaufenden Kolbenkompressor, insbesondere zum Verdichten sehr leichter Gase, einen wirtschaftlich vorteilhafteren, insbesondere verschleissarmen Kolbenring zu bilden.

Diese Aufgabe wird gelöst mit einem Kolbenring aufweisend die Merkmale von Anspruch 1. Die Unteransprüche 2 bis 8 betreffen weitere, vorteilhaft ausgestaltete Kolbenringe.

Die Erfindung wird insbesondere gelöst mit einem Kolbenring bestehend aus einem ersten und einem zweiten Teilring mit Stossstellen, wobei die beiden Teilringe bezüglich einer Achse gegenseitig konzentrisch verlaufend angeordnet sind, und wobei der erste Teilring einen im wesentlichen L-förmigen Querschnitt aufweist, mit einem in Richtung der Achse verlaufenden ersten Schenkel sowie mit einem im wesentlichen radial zur Achse gegen aussen verlaufenden zweiten Schenkel, wobei der zweite Schenkel eine erste Auflagefläche und der zweite Teilring eine zweite Auflagefläche aufweist, wobei die erste und die zweite Auflagefläche zur gegenseitigen Auflage angepasst ausgestaltet sind, und wobei die erste und die zweite Auflagefläche eine Unstetigkeit aufweisen.

Die erste und zweite Auflagefläche der beiden Teilringe weisen je eine Unstetigkeit auf, wobei diese Unstetigkeit als Knickstelle oder als Absatz ausgestaltet ist. Diese Unstetigkeiten verlaufen vorzugsweise konzentrisch zur genannten Achse. Die Unstetigkeiten sind vorzugsweise derart angeordnet, dass die Unstetigkeiten der beiden aufeinanderliegenden Teilringe deckungsgleich angeordnet sind. Diese Unstetigkeiten haben zur Folge, dass die beiden Teilringe bezüglich einer Bewegung in radialer Richtung, sowohl nach innen als auch nach aussen, mechanisch aneinander gekoppelt sind, sodass eine radiale Bewegung des einen Teilringes nicht mehr unabhängig von der Bewegung des anderen Teilringes möglich ist. Durch diese mechanische Koppelung wird eine gegenseitige Flatterbewegung der beiden Teilringe verhindert, sodass der erfindungsgemässe Kolbenring einen sehr geringen Verschleiss aufweist.

Bei trockenlaufenden Kolbenkompressoren steht kein Schmiermittel zur Verfügung, um die Kolbenringe eines Kolbens zu schmieren und zusätzlich abzudichten. Daher sind metallische Kolbenringe ungeeignet für eine solche trockenlaufende Anwendung. Die trockenlaufenden Reibpaarungen funktionieren aufgrund von Festschmierstoffen, die in einem der Reibpartner enthalten sind. Der erfindungsgemässe Kolbenring besteht daher aus einem für den Trockenlauf speziell mit Festschmierstoffen wie PTFE, Graphit oder Molybdändisulfid modifizierten Kunststoff.

Vor allem bei der Verdichtung sehr leichter Gase auf einen sehr hohen Druck, beispielsweise bei Wasserstoff, sind Dichtelemente mit einer sehr hohen Dichtwirkung erforderlich, um die Leckage möglichst gering zu halten. Eine gute Dichtwirkung kann beispielsweise erreicht werden, indem zwei Kolbenringe so zu einem Twin-Ring kombiniert werden, dass sich keine durchgängigen Spalten oder Stösse ergeben.

Die selbstschmierende Wirkung der trockenlaufenden Reibdichtungen hat zur Folge, dass sich die schmierstoffliefernden Kolbenringe allmählich verschleissen. Der aus dem Stand der Technik bekannte Kolbenring weist den Nachteil auf, dass bei einer Strömungsumkehr die beiden Teilringe in radialer Richtung gegeneinander verschiebbar sind, und dadurch eine Flatterbewegung auftritt. Da der Druckverlauf in den der Zylinderwand zugewandten, dichtenden Teilflächen der beiden Ringflächen nicht konstant ist, hat die radiale Verschiebbarkeit zur Folge, dass einer der beiden Teilringe schneller verschleisst als der andere. Dieser ungleiche Verschleiss bewirkt, dass sich die beiden Teilringe nicht mehr vollständig überdecken, sodass ein Spalte entstehen, wobei insbesondere bei sehr leichten Gasen unter hohem Druck hohe Leckgasmengen strömen, was die Fördermenge des Trockenlaufkompressors erheblich verschlechtert. Der erfindungsgemässe Kolbenring ist insbesondere für die trockenlaufende Verdichtung sehr leichter Gase auf einen hohen Verdichtungsenddruck geeignet. Der Kolbenring weist den Vorteil auf, dass durch den Aufbau aus zwei Teilringen und die gegenseitige Koppelung durch die an den Auflageflächen angebrachten Unstetigkeiten, während dem Betrieb an beiden Teilringen ein gleichmässiger, harmonisierter Verschleiss erfolgt. Durch den Druck des zu komprimierenden Fluids werden die beiden Teilringe gegeneinander gepresst, und bei Druckumkehr sind die beiden Teilringe durch die Unstetigkeiten gegenseitig verzahnt, sodass während dem Betrieb zwischen den beiden Teilringen keine oder eine nur geringe gegenseitige Relativbewegung erfolgt, so dass die zum Beispiel einer Zylinderwand zugewandten, dichtenden Teilflächen der beiden Ringteile einen gleichmässigen Materialabtrag erfahren. Auf diese Weise können sich keine oder nur geringe örtlichen Leckstellen ausbilden, wodurch bei trockenlaufenden Kolbenkompressoren die Dichtwirkung des Kolbenringes über einen langen Betriebszeitraum annähernd konstant bleibt.

Ein weiterer Vorteil des erfindungsgemässen Kolbenrings ist die Tatsache, dass durch die gegenseitige Koppelung der beiden Teilringe der zwischen den gegenseitigen Auflageflächen bestehende Spalt nicht oder kaum verschmutzt.

Die Erfindung wird weiter an Hand mehrerer Ausführungsbeispiele beschrieben. Es zeigen:
- Fig. 1: einen Längsschnitt durch einen trockenlaufenden Kolbenkompressor mit Kolben, Kolberingen und Zylinder;
- Fig. 2a: eine Aufsicht auf einen ersten Teilring;
- Fig. 2b: eine Aufsicht auf einen zweiten Teilring;
- Fig. 3a: einen Querschnitt entlang der Schnittlinie A-A durch den ersten Teilring;
- Fig. 3b: einen Querschnitt entlang der Schnittlinie B-B durch den zweiten Teilring;
- Fig. 4a: einen Querschnitt durch ein zweites Ausführungsbeispiel eines ersten Teilringes;
- Fig. 4b: einen Querschnitt durch ein zweites Ausführungsbeispiel eines zweiten Teilringes
- Fig. 5a: einen Querschnitt durch ein drittes Ausführungsbeispiel eines ersten Teilringes;
- Fig. 5b: einen Querschnitt durch ein drittes Ausführungsbeispiel eines zweiten Teilringes
- Fig. 6a: einen Querschnitt durch ein viertes Ausführungsbeispiel eines ersten Teilringes;
- Fig. 6b: einen Querschnitt durch ein viertes Ausführungsbeispiel eines zweiten Teilringes.

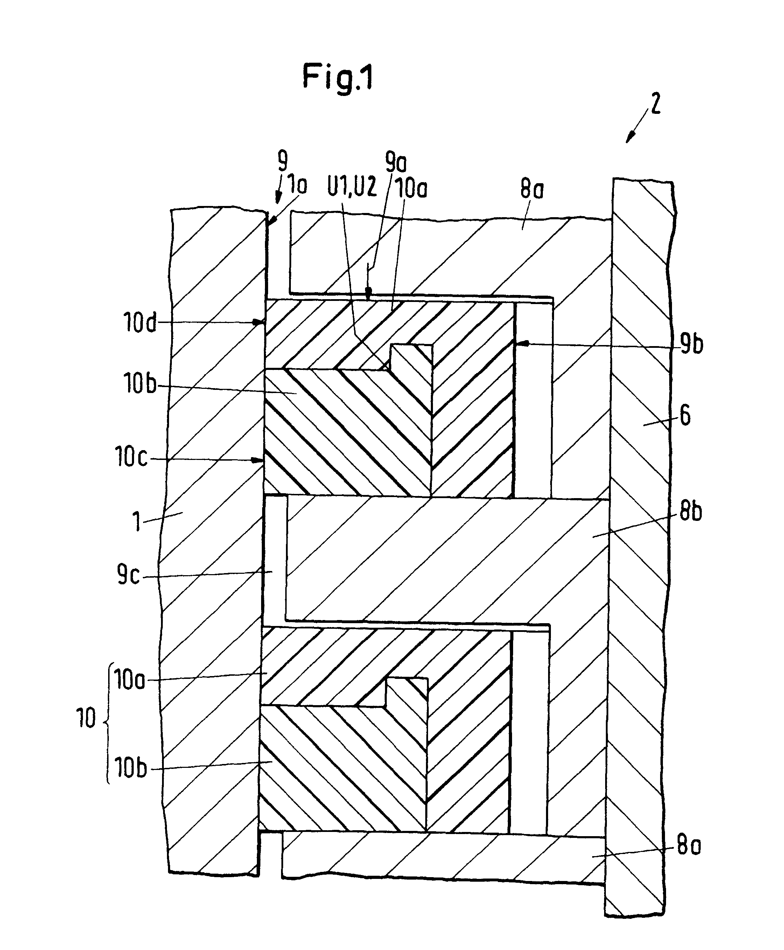

Fig. 1 zeigt einen Längsschnitt durch einen trockenlaufenden Kolbenkompressor mit einem Zylinder 1, in dem ein teilweise dargestellter Kolben 2 auf- und abbeweglich angeordnet ist. Das untere Ende des Kolbens 2 geht in eine Kolbenstange über, die in bekannter, nicht dargestellter Weise mit einem Kurbeltrieb verbunden ist. Oberhalb des Kolbens 2 befindet sich ein Kompressionsraum, in dem in bekannter, nicht dargestellter Weise beim Abwärtshub des Kolbens 2 ein zu verdichtendes Gas eingesogen wird, das beim anschliessenden Aufwärtshub verdichtet und aus dem Kompressionsraum ausgestossen wird. Der Kolben 2 umfasst eine Hülse 6, welche mit der Kolbenstange verbunden ist. Entlang der Hülse 6 sind beispielsweise sieben Kolbenringe 10 übereinander und gegenseitig beabstandet angeordnet. Der Kolben 2 ist als ein gebauter Kolben ausgestaltet, indem die Einzelteile des Kolbens 2 sowie die Kolbenringe 10 durch eine am oberen Ende des Kolbens 2 aufgeschraubte Mutter zusammengehalten werden. Der Kolben 2 weist eine Mittenachse C auf.

Der dargestellte, gebaute Kolben 2 ist aus Einzelteilen gefertigt und umfasst die in axialer Richtung verlaufende Hülse 6, die um die Hülse 6 angeordneten Kammerringe 8a,8b sowie die in den Nuten angeordneten Kolbenringe 10, wobei die Kolbenringe 10 jeweils aus einem ersten Teilring 10a und einem zweiten Teilring 10b bestehen. Die beiden Teilringe 10a,10b sind derart gegenseitig angepasst ausgestaltet, dass die sich gegenseitig berührenden Teilflächen formschlüssig aneinander zu liegen kommen. Beide Teilringe 10a, 10b weisen jeweils der Zylinderwand 1 zugewandte Flächen 10c, 10d auf, welche während des Betriebes des Kolbens 2 auf der Zylinderwand 1 gleitend auf- und abwärts bewegt werden.

Der erste Teilring 10a ist im Zylinder 1 zur Druckseite hin angeordnet, wobei der Gasdruck 9 sowohl in axialer Richtung 9a als auch in radialer Richtung 9b wirkende Kräfte auf den ersten Teilring 10a ausübt, sodass der gesamte Kolbenring 10 erstens in radialer Richtung gegen die Innenwand 1a des Zylinders 1 gedrückt wird und zweitens in axialer Richtung gegen die der Druckseite entfernten Begrenzungsfläche der Nut gedrückt wird. Dadurch wird die Dichtwirkung des Kolbenrings 10 während des Betriebes erhöht und die beiden Teilringe 10a, 10b sind ohne gegenseitige Relativbewegung gegenseitig formschlüssig in der Nut gehalten. Während der expandierenden Bewegung des Kolbens kann eine Druckumkehr auftreten, indem der Gasdruck 9 der Druckseite geringer wird als beispielsweise der Druck im Innenraum 9c. Dies hat im Bereich der Kolbenringe 10 eine Strömungsumkehr zur Folge, indem Restgas aus dem Innenraum 9c in der Anordnung gemäss Figur 1 nach oben strömt. Auch während dieser Strömungsumkehr sind die beiden Teilringe 10a, 10b bezüglich einer Bewegung in radialer Richtung fest aneinander gekoppelt, sodass beide Teilringe 10a, 10b dieselbe Bewegung ausführen und somit keine gegenseitige Relativbewegung auftritt. Diese gegenseitig formschlüssige Verbindung hat zur Folge, dass die auf der Zylinderwand 1a gleitenden und reibenden Teilflächen 10c,10d der beiden Teilringe 10a, 10b gleichmässig abgenutzt werden, sodass keine lokale Leckstelle entsteht und die beiden Teilringe 10a, 10b über einen langen Betriebszeitraum gleichwirkend auf der Zylinderwand 1a aufliegen.

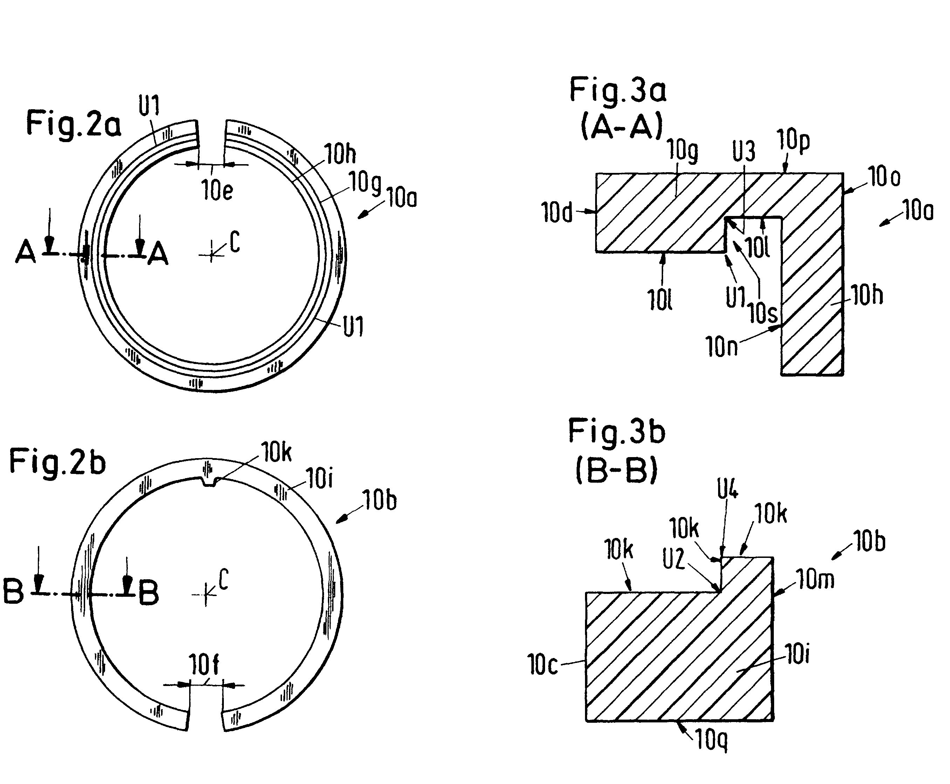

Der in Figur 1 dargestellte Kolbenring 10, umfassend die Teilringe 10a, 10b, ist in den Figuren 2a, 2b in einer Aufsicht und in den Figuren 3a, 3b in einem Querschnitt dargestellt. Die beiden Teilringe 10a, 10b verlaufen kreisförmig und konzentrisch um die Mittenachse C. Fig. 2a zeigt den ersten Teilring 10a des Kolbenringes 10, einen L-förmig oder annähernd L-förmig ausgestalteten ringförmigen Körper, mit einer Stossstelle 10e. Dieser Teilring 10a weist zwei Schenkel 10g, 10h auf, einen parallel in Richtung der Achse C verlaufenden ersten Schenkel 10h und einen zweiten, radial oder ungefähr radial zur Achse C nach aussen verlaufenden Schenkel 10g. Die Breite der Stossstelle 10e ist derart ausgestaltet, dass dem ersten Teilring 10a in Umfangsrichtung ein gewisse Federbewegung möglich ist.

Fig. 3a zeigt einen Querschnitt durch den ersten Teilring 10a entlang der Schnittlinie A-A gemäss Fig. 2a. Der L-förmig ausgestaltete erste Teilring 10a weist einen parallel zur Achse C verlaufenden ersten Schenkel 10h auf, welcher eine Aussenfläche 10o sowie eine Innenfläche 10n aufweist. Der radial zur Achse C verlaufende zweite Schenkel 10g weist eine senkrecht zur Achse C verlaufende Aussenfläche 10p auf. Die Innenfläche 10l weist einen Absatz 10s auf, welcher parallel zur Achse C verläuft, sodass sich an der Stelle U1 und U3 eine Unstetigkeit bildet. Unter dem Begriff Unstetigkeit U1, U3 wird die Eigenschaft verstanden, dass der Verlauf der Fläche einen Knickstelle aufweist. Wie aus Figur 2a ersichtlich, weist die Innenfläche 10l auf Grund des Absatzes 10s eine entlang dem ersten Schenkel 10h umlaufende Nut auf.

Fig. 3b zeigt einen Querschnitt des zweiten Teilringes 10b entlang der Schnittlinie B-B gemäss Fig. 2b. Der zweite Teilring 10b ist entsprechend dem Verlauf der beiden Innenflächen 10l, 10n des ersten Teilrings 10a angepasst ausgestaltet. Der Ringkörper 10i weist vier Flächen auf, die der Zylinderwand zugewandte Fläche 10c, die dem Kammerring 8 zugewandte Fläche 10q sowie die beiden dem ersten Teilring 10a zugewandten Flächen 10m, 10k. Die beiden letztgenannten Auflageflächen 10m, 10k sind derart bezüglich dem ersten Teilring 10a angepasst ausgestaltet, dass bei ineinander angeordneten Teilringen 10a, 10b die Auflageflächen 10m, 10k formschlüssig auf die beiden Auflageflächen 10l, 10n zu liegen kommen.

Figur 2b zeigt eine Aufsicht des zweiten Teilrings 10b, welcher eine Stossstelle 10f und gegenüberliegend eine gegen die Achse C hin vorstehende Nocke 10k aufweist. Beim zusammengebauten Kolbenring 10 wird der zweite Teilring 10b über den ersten Teilring 10a gelegt, unter Beibehaltung der in den Figuren 2a,2b dargestellten Lage, sodass die Nocke 10k zwischen die Stossstelle 10e des ersten Teilrings 10a zu liegen kommt, sodass die beiden Teilringe 10a, 10b bezüglich einer gegenseitigen Verdrehung gesichert sind. Vorteilhafterweise ist die Nocke 10k in Umfangsrichtung schmaler ausgestaltet als die Breite der Stossstelle 10e, sodass der zweiten Teilring 10a an der Stossstelle 10e eine gewisse Beweglichkeit in Umfangsrichtung beibehält.

Der in den Figuren 2a, 2b, 3a und 3b dargestellte Kolbenring 10 weist den Vorteil auf, dass dieser besonders kostengünstig herstellbar ist, weil der Absatz 10s im ersten Teilring 10a einfach zu fertigen ist, und weil die beiden Teilringe 10a, 10b keine schräg verlaufenden Flächen aufweisen, sondern nur parallel oder gegenseitig rechtwinklig verlaufende Flächen, was eine kostengünstige Herstellung und eine einfache Kontrolle der Masshaltigkeit und der Toleranzen der gefertigten Teilringe 10a, 10b ermöglicht.

Figur 1 zeigt einen gebauten Kolben 2, in welchem die Kolbenringe 10 angeordnet sind. An Stelle eines gebauten Kolbens 2 könnte der Kolben 2 jedoch auch eine durch eine umlaufende Nut ausgebildete Ringkammer aufweisen, in welcher der Kolbenring 10, beispielsweise der in den Figuren 2a, 2b, 3a, 3b dargestellte Kolbenring10, angeordnet ist. Der erfindungsgemässe Kolbenring 10 ist daher nicht nur für einen gebauten Kolben 2 geeignet.

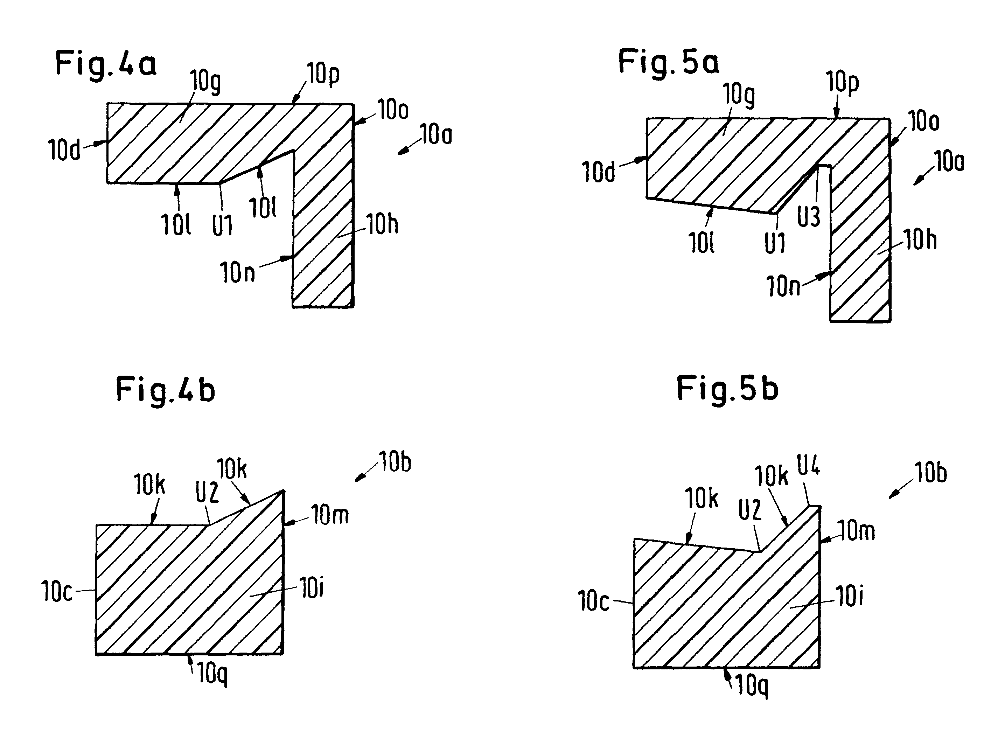

Die Figuren 4a und 4b zeigen in einem Querschnitt ein weiteres Ausführungsbeispiel eines Kolbenrings 10 umfassend den ersten Teilring 10a sowie den zweiten Teilring 10b. Die erste Auflagefläche 10l des ersten Teilrings 10a weist eine Unstetigkeit U1 auf. Die Unstetigkeit U1 verläuft konzentrisch zur Achse C. Die erste Auflagefläche 10l verläuft, ausgehend von der Unstetigkeit U1, gegen aussen senkrecht zur Achse C, beziehungsweise parallel zur Fläche 10p, und gegen innen unter einem konstanten Steigungswinkel, beziehungsweise konisch. Die zweite Auflagefläche 10k des zweiten Teilrings 10b ist bezüglich der ersten Auflagefläche 10l gegengleich ausgestaltet und weist eine Unstetigkeit U2 auf.

Die Figuren 5a und 5b zeigen in einem Querschnitt ein weiteres Ausführungsbeispiel eines Kolbenrings 10 umfassend den ersten Teilring 10a sowie den zweiten Teilring 10b. Die erste Auflagefläche 10l des ersten Teilrings 10a weist zwei Unstetigkeiten U1 und U3 auf. Die Unstetigkeiten U1, U3 verlaufen konzentrisch zur Achse C. Die zweite Auflagefläche 10k des zweiten Teilrings 10b ist der ersten Auflagefläche 10l gegengleich angepasst ausgestaltet und weist die beiden Unstetigkeiten U2 und U4 auf.

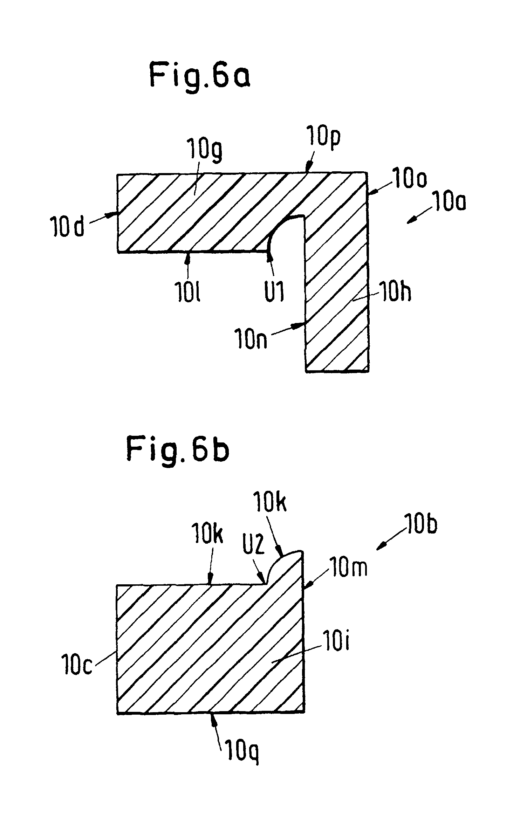

Die Figuren 6a und 6b zeigen in einem Querschnitt ein weiteres Ausführungsbeispiel eines Kolbenrings 10 umfassend den ersten Teilring 10a sowie den zweiten Teilring 10b. Die erste Auflagefläche 10l des ersten Teilrings 10a weist eine Unstetigkeit U1 auf. Die Unstetigkeit U1 verläuft konzentrisch zur Achse C. Die erste Auflagefläche 10l verläuft, ausgehend von der Unstetigkeit U1, gegen aussen senkrecht zur Achse C, beziehungsweise parallel zur Fläche 10p, und gegen innen kreissegmentförmig. Die zweite Auflagefläche 10k des zweiten Teilrings 10b ist der ersten Auflagefläche 10l gegengleich angepasst ausgestaltet und weist eine Unstetigkeit U2 auf.

Ein Vorteil des erfindungsgemässen Kolbenringes 10 ist darin zu sehen, dass die Auflageflächen 10l, 10n, 10k, 10m der beiden Teilringe 10a, 10b auch während des Betriebes des Kolbenrings 10 über lange Zeit formschlüssig aneinander gekoppelt sind. Die beiden Teilringe 10a,10b sind derart ausgestaltet, dass ein direktes Einwirken des unter Druck stehenden Gases 9 auf die Teilflächen 10l, 10n, 10k, 10m möglichst verhindert wird. Der auf die Teilringe 10a,10b wirkende Gasdruck 9 greift üblicherweise an der Stossstelle 10f an und bewirkt eine in Umfangsrichtung des zweiten Teilringes 10b wirkende Kraft. Durch den Eingriff des zweiten Teilringes 10b in den ersten Teilring 10a tritt trotz dieser Kraft kein Abheben des zweiten Teilringes 10b vom ersten Teilring 10a auf, sodass der Gasdruck nicht direkt auf die Teilflächen 10l, 10n, 10k, 10m wirken kann. Ein direktes Einwirken des Gasdruckes auf die Teilflächen 10m, 10k des zweiten Teilringes 10b würde einen relativ schnellen Verschleiss des zweiten Teilringes 10b zur Folge haben. Um diesen Effekt zu verhindern weist der erfindungsgemässe Kolbenring 10 Teilringe 10a, 10b mit Unstetigkeiten U1, U2 auf, welche ein gegenseitiges Abheben des zweiten Teilringes 10b vom ersten Teilring 10a verhindern. Gemäss Figur 1 wird der Kolbenring 10 durch das einwirkende Gas 9a in axialer Richtung gegen den Kammerring 8b und in radialer Richtung durch das einwirkende Gas 9b gegen die Wand 1a des Zylinders 1 gedrückt. Der mit diesem Druck beaufschlagte erste Teilring 10a übt entsprechende Kräfte auf den zweiten Teilring 10b aus. Durch die ineinandergreifende Ausgestaltung der Auflageflächen 10k, 10l bewirken die durch den Gasdruck angreifenden Kräfte einen verstärkten gegenseitigen Halt der beiden Teilringe 10a, 10b, sodass die Auflageflächen 10k, 10l, 10m, 10n verstärkt gegeneinander angepresst werden. Dadurch wird eine direkte Einwirkung des Gasdruckes auf die Auflageflächen 10k, 10l, 10m, 10n verhindert.

Es gibt eine Vielzahl von Möglichkeiten zur Ausgestaltung der Teilflächen 10k, 10l, 10m, 10n derart, dass der Verlauf der Auflageflächen 10k, 10l eine Unstetigkeit U1, U2 aufweist. Der in den Figuren 3a bis 6b dargestellte, radiale Querschnitt zeigt Unstetigkeiten U1, U2, U3, U4, welche durch dreieckförmige, rechteckförmige oder kreissegmentförmige Abschnitte gebildet sind. Es sind natürlich auch anders ausgestaltete Abschnitte möglich, welche die Eigenschaft aufweisen, dass sie im ersten und zweiten Teilring 10a, 10b zumindest eine Unstetigkeit U1, U2 ausbilden.

Die Teilringe 10a, 10b sind aus einem Kunststoff ausgebildet, insbesondere aus Kunststoffen wie Polytetrafluorethylen (PTFE), einem modifizierten Hochtemperatur-Polymer wie Polyetheretherketon (PEEK), Polyetherketon (PEK), Polyimid (Pl), Polyphenylensulfid (PPS) Polybenzimidazol (PBI), Polyamidimid (PAI) oder einem modifizierten Epoxidharz. Die Hochtemperatur-Polymere sind Kunststoffe, die in reiner Form nicht trockenlauffähig sind, sodass die oben genannten Kunststoffe üblicherweise mit zusätzlichen Festschmierstoffen wie z.B. Kohle, Graphit, Molybdändisulfid oder PTFE gefüllt sind.

## Patentansprüche

1. Kolbenring (10) für einen trockenlaufenden Kolbenkompressor, bestehend aus einem ersten und einem zweiten Teilring (10a, 10b) mit Stossstellen (10e, 10f), wobei die beiden Teilringe (10a, 10b) bezüglich einer Achse (C) gegenseitig konzentrisch verlaufend angeordnet sind, und wobei der erste Teilring (10a) einen im wesentlichen L-förmigen Querschnitt aufweist, mit einem in Richtung der Achse (C) verlaufenden ersten Schenkel (10h) sowie mit einem im wesentlichen radial zur Achse (C) gegen aussen verlaufenden zweiten Schenkel (10g), wobei der zweite Schenkel (10g) eine erste Auflagefläche (10l) und der zweite Teilring (10b) eine zweite Auflagefläche (10k) aufweist, und wobei die erste und die zweite Auflagefläche (10l, 10k) zur gegenseitigen Auflage angepasst ausgestaltet sind, **dadurch gekennzeichnet, dass** die erste und die zweite Auflagefläche (10k, 10l) eine Unstetigkeit (U1, U2) aufweisen.

2. Kolbenring (10) nach Anspruch 1, **dadurch gekennzeichnet, dass** die Unstetigkeiten (U1, U2) übereinander liegend angeordnet sind.

3. Kolbenring (10) nach einem der vorhergehenden Ansprüche, **dadurch gekennzeichnet, dass** die Unstetigkeiten (U1, U2) konzentrisch zur Achse (C ) verlaufen.

4. Kolbenring (10) nach einem der vorhergehenden Ansprüche, **dadurch gekennzeichnet, dass** der zweite Teilring (10b) am ersten Schenkel (10h) des ersten Teilrings (10a) anliegt.

5. Kolbenring (10) nach einem der vorhergehenden Ansprüche, **dadurch gekennzeichnet, dass** die Auflagefläche (10k, 10l), ausgehend von der Unstetigkeit (U1, U2), gegen aussen senkrecht oder im wesentlichen senkrecht zur Achse (C ) verläuft.

6. Kolbenring (10) nach einem der vorhergehenden Ansprüche, **dadurch gekennzeichnet, dass** der radiale Querschnitt durch den ersten und zweiten Teilring (10a, 10b), ausgehend von der Unstetigkeit (U1, U2) gegen innen, einen dreieckförmigen, rechteckförmigen oder kreissegmentförmigen Abschnitt aufweist.

7. Kolbenring (10) nach einem der vorhergehenden Ansprüche, **dadurch gekennzeichnet, dass** die Auflagefläche (10k, 10l) im Bereich der Unstetigkeit (U1, U2) einen Absatz aufweist, welcher parallel oder im wesentlichen parallel zur Achse (C) verläuft.

8. Kolbenring (10) nach einem der vorhergehenden Ansprüche, **dadurch gekennzeichnet, dass** der erste und/oder zweite Teilring (10a, 10b) aus einem Material aus der Gruppe Polytetrafluorethylen (PTFE), modifizierter Hochtemperatur-Polymer wie Polyetheretherketon (PEEK), Polyetherketon (PEK), Polyimid (Pl), Polyphenylensulfid (PPS), Polybenzimidazol (PBI), Polyamidimid (PAI) oder modifiziertes Epoxidharz besteht, wobei diese Materialien zusätzliche Festschmierstoffe wie Kohle, Graphit, Molybdändisulfid oder PTFE enthalten können.

9. Trockenlaufender Kolbenkompressor mit einem Kolbenring nach einem der vorhergehenden Ansprüche.

## Claims

1. Piston ring (10) for a dry-running piston compressor, consisting of a first and a second ring part (10a, 10b) having gaps or butt joints (10e, 10f), in which the two ring parts (10a, 10b) are arranged to be mutually concentric relative to an axis (C) and the first ring part (10a) exhibits an essentially L-shaped cross-section having a first arm (10h) which extends in the direction of the axis (C) as well as a second arm (10g) extending outwards essentially in a direction radial to the axis (C), and in which the second arm (10g) has a first bearing surface (10l) and the second ring part (10b) has a second bearing surface (10k), and in which the first and the second bearing surfaces (10l, 10k) are designed to fit perfectly on top of each other, wherein the first and the second bearing surfaces (10k, 10l) exhibit discontinuities (U1, U2).

2. A piston ring (10) according to claim 1, wherein the discontinuities U1, U2 are arranged to be situated on top of each other.

3. A piston ring (10) according to one of the previous claims, wherein the discontinuities (U1, U2) run concentrically to the axis (C).

4. A piston ring (10) according to one of the previous claims, wherein the second ring part (10b) rests against the first arm (10h) of the first ring part (10a).

5. A piston ring (10) according to one of the previous claims, wherein the bearing surfaces (10k, 10l) extend in a direction perpendicular or essentially perpendicular to the axis (C) outwards from the discontinuity (U1, U2).

6. A piston ring (10) according to one of the previous claims, wherein the radial cross-section through the first and second ring parts (10a,10b) exhibits a section, which starts from the discontinuity (U1, U2) and runs inwards, having a triangular or rectangular shape, or is in the shape of a segment of a circle.

7. A piston ring (10) according to one of the previous claims, wherein the bearing surfaces (10k, 10l) exhibit a step in the region of the discontinuity (U1, U2), which runs parallel or essentially parallel to the axis (C).

8. A piston ring (10) according to one of the previous claims. wherein, the first and / or the second ring parts (10a, 10b) is made of a material from the group of polytetrafluoroethylene (PTFE) polymers, modified high temperature polymers such as polyetheretherketone (PEEK), polyetherketone (PEK), polyimide (PI), polyphenyl sulphide (PPS), polybenzimidazole (PBI), polyamide imide (PAI) or a modified epoxy resin, these materials possibly containing additional solid lubricants such as carbon, graphite, molybdenum sulphide or PTFE.

9. A dry-running piston compressor having a piston ring according to one of the previous claims.

## Revendications

1. Segment de piston (10) pour un compresseur à piston sec, constitué d'un premier et d'un second segment partiel (10a, 10b) avec des emplacements de joint (10e, 10f), où les deux segments partiels (10a, 10b) sont disposés pour s'étendre relativement à un axe (C) mutuellement d'une manière concentrique, et où le premier segment partiel (10a) présente une section transversale sensiblement en forme de L, avec une première branche (10h) s'étendant en direction de l'axe (C) et avec une seconde branche (10g) s'étendant sensiblement radialement vers l'axe (C) vers l'extérieur, où la seconde branche (10g) présente une première face d'application (10l) et le second segment partiel (10b) une seconde face d'application (10k), et où la première et la seconde face d'application (10l, 10k) sont réalisées d'une manière adaptée à l'application mutuelle, **caractérisé en ce que** la première et la deuxième face d'application (10k, 10l) présentent une discontinuité (U1, U2).

2. Segment de piston (10) selon la revendication 1,
**caractérisé en ce que** les discontinuités (U1, U2) sont disposées pour se situer l'une au-dessus de l'autre.

3. Segment de piston (10) selon l'une des revendications précédentes, **caractérisé en ce que** les discontinuités (U1, U2) s'étendent concentriquement à l'axe (C).

4. Segment de piston (10) selon l'une des revendications précédentes, **caractérisé en ce que** le deuxième segment partiel (10b) s'applique à la première branche (10h) du premier segment partiel (10a).

5. Segment de piston (10) selon l'une des revendications précédentes, **caractérisé en ce que** la face d'application (10k, 10l), en partant de la discontinuité (U1, U2), s'étend vers l'extérieur perpendiculairement ou sensiblement perpendiculairement à l'axe (C).

6. Segment de piston (10) selon l'une des revendications précédentes, **caractérisé en ce que** la section transversale radiale à travers le premier et le second segment de piston (10a, 10b), en partant de la discontinuité (U1, U2), présente vers l'intérieur un segment triangulaire, rectangulaire ou en forme de segment de cercle.

7. Segment de piston (10) selon l'une des revendications précédentes, **caractérisé en ce que** la face d'application (10k, 10l) présente au voisinage de la discontinuité (U1, U2) un gradin qui s'étend parallèlement ou sensiblement parallèlement à l'axe (C).

8. Segment de piston (10) selon l'une des revendications précédentes, **caractérisé en ce que** le premier et/ou second segment partiel (10a, 10b) est réalisé en un matériau du groupe polytétrafluoroéthylène (PTFE), un polymère haute température modifié comme le polyéther-éthercétone (PEEK), polyéthercétone (PEK), polyimide (PI), sulfure de polyphénylène (PPS), polybenzimidazole (PBI), polyamidimide (PAI) ou en résine époxy modifiée, où ces matériaux peuvent contenir des lubrifiants solides additionnels comme le carbone, graphite, sulfure de molybdène ou PTFE.

9. Compression à piston sec avec un segment de piston selon l'une des revendications précédentes.
